## Europäisches Patentamt

## European Patent Office

## Office européen des brevets

(19)

(11) Veröffentlichungsnummer: **0 045 491**
**B1**

(12)

# EUROPÄISCHE PATENTSCHRIFT

(45) Veröffentlichungstag der Patentschrift:
**28.09.83**

(51) Int. Cl.³: **F 24 C 3/00, B 60 H 1/22**

(21) Anmeldenummer: **81106003.7**

(22) Anmeldetag: **30.07.81**

(54) **Raumheizgerät für Kleinräume.**

(30) Priorität: **01.08.80 DE 3029298**

(43) Veröffentlichungstag der Anmeldung:
**10.02.82 Patentblatt 82/6**

(45) Bekanntmachung des Hinweises auf die Patenterteilung:
**28.09.83 Patentblatt 83/39**

(84) Benannte Vertragsstaaten:
**BE FR GB IT NL SE**

(56) Entgegenhaltungen:
**US-A-3 604 505**

(73) Patentinhaber: **Philipp Kreis GmbH & Co.
TRUMA-Gerätebau, Neumarkter Strasse 34-36,
D-8000 München 80 (DE)**

(72) Erfinder: **Kreis, Philipp, Neumarkter Strasse 34,
D-8000 München 80 (DE)**

(74) Vertreter: **Hain, Leonhard, Dipl.-Ing., Tal 18/IV,
D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Raumheizgerät für Kleinräume

Die Erfindung betrifft ein mit gasförmigem oder vergastem flüssigem Brennstoff befeuertes Raumheizgerät für Kleinräume, insbesondere für Wohnwagen, mit gegen den zu beheizenden Raum abgeschlossenem Verbrennungsraum und einem daran anschließenden, als Wärmetauscher ausgebildeten Verbrennungsgaskanal mit einem oberen waagerechten Querkanal sowie mit an den Seitenwänden des Verbrennungsgaskanals vertikal angeordneten Außenlamellen.

Bei einem Raumheizgerät dieser Art (DE-A-1 454 295) ist der Verbrennungsgaskanal in seiner Länge einzügig und mit glatt durchgehenden Kanalwänden ausgeführt. Von einem waagerechten Querkanal führt ein abwärtsgerichteter Kanalteil mäanderförmig nach unten. Die Seitenwände des Verbrennungsgaskanals bilden parallele, jeweils in einer gemeinsamen Ebene liegende Flächen, die außen in Strömungsrichtung der aufsteigenden Warmluft verlaufende Außenlamellen aufweisen. Bei stärkerer Belastung dieses Heizgerätes wird der Querkanal übermäßig erhitzt und dadurch die Leistung des Gerätes beeinträchtigt. Zur Abhilfe wurde bei einem anderen Raumheizgerät dieser Art (DE-A-2 016 560) der obere Querkanal auf seiner ganzen Länge mit einer satteldachförmigen Decke mit einer Steigung von mehr als 40% versehen. Auch von dieser Satteldachdecke stehen Außenlamellen ab, deren Außenkanten mit den Außenkanten der übrigen Außenlamellen ebenengleich abschließen und zur Bildung durchgehender Strömungskanäle zueinander ausgerichtet sind. Auch wenn hierbei im Satteldachbereich Lamellen mit vergrößerter Fläche entstehen, so kann sich auch dieser Querkanal noch auf unerwünscht hohe Temperaturen erhitzen, insbesondere dann, wenn sich an ihn ein abwärtsführender Kanalteil anschließt.

Der Erfindung liegt daher die Aufgabe zugrunde, ein Heizgerät mit einem Querkanal so zu verbessern, daß die Wärmeabgabe insbesondere von diesem Querkanal an die hochsteigende Luft verstärkt und dadurch seine Oberflächentemperatur abgesenkt wird.

Diese Aufgabe wird an einem Heizgerät der eingangs genannten Art gemäß der Erfindung dadurch gelöst, daß die Außenlamellen des Querkanals mindestens im Bereich seiner stärksten Erhitzung zu Großflächenlamellen ausgebildet sind, deren Außenkanten von der vertikalen Wand des Querkanals einen größeren Abstand als die Außenkanten der darunterliegenden Außenlamellen von ihrer zugehörigen Kanalwand aufweisen.

Durch die Großflächenlamellen, die über die darunter befindlichen Lamellenabschnitte vorstehen, wird im heißesten Bereich des Verbrennungsgaskanals, am Querkanal, nicht nur die Wärmeübergangsfläche merklich vergrößert, sondern zusätzlich ein Auftriebsschacht für äußere, kühlere Luftschichten, die noch nicht an Außenlamellen erwärmt worden sind, geschaffen. Diese kühleren äußeren Luftströme erwärmen sich an den Großflächenlamellen verstärkt, wodurch die Wärmeabgabe in diesem Bereich intensiviert und die Oberflächentemperatur in diesem Bereich abgesenkt wird. Gerade für den Einbau in Wohnwagen oder anderen fahrbaren und beengten Räumen ist eine niedrigere Oberflächentemperatur des Heizgerätes besonders erwünscht.

Vorteilhaft sollen sich diese Großflächenlamellen entlang des gesamten Querkanals erstrecken.

Falls sich der Verbrennungsgaskanal mit einem abwärtsführenden, unter dem Querkanal angeordneten Kanalteil fortsetzen sollte, dann ist es zweckmäßig, die Großflächenlamellen auf die volle Höhe des Querkanals auszudehnen. In diesem Falle bildet der Querkanal auf seiner gesamten Fläche gegenüber den übrigen Außenlamellen erweiterte Auftriebsschächte für die äußeren Luftschichten. Je nach den Verhältnissen kann es von Vorteil sein, die Großflächenlamellen entweder nur auf einen oberen Abschnitt des Querkanals zu beschränken oder sie auf dessen gesamte Fläche auszudehnen.

Während eine Verlängerung der Großflächenlamellen nach unten über den Querkanal hinaus ihre Wirksamkeit in bezug auf den Querkanal vermindert, kann es andererseits vorteilhaft sein, die Großflächenlamellen nach oben über die Querkanaldecke hinausstehen zu lassen.

Eine beachtliche Verringerung der Oberflächentemperatur des Querkanals wird erzielt, wenn die Großflächenlamellen etwa doppelt so tief sind, wie die darunterliegenden Außenlamellen. Eine über das Dreifache hinausgehende Vergrößerung bringt keinen besonderen Vorteil mehr, während andererseits eine Verringerung der Oberflächentemperatur schon feststellbar ist, wenn die Großflächenlamellen nur geringfügig über die Außenlamellen erweitert sind.

Schließlich kann aber eine weitere Verbesserung erreicht werden, wenn die unter den Großflächenlamellen vorhandenen Außenlamellen bzw. Lamellenabschnitte allmählich oder stufenweise bis höchstens auf die Höhe der Großflächenlamellen erweitert sind.

Die Erfindung wird nachfolgend anhand eines Ausführungsbeispiels eines Heizgerätes mit einem Verbrennungsgaskanal mit abwärtsführenden Kanalteilen, das auch in der Zeichnung schematisch dargestellt ist, näher beschrieben. Es zeigt

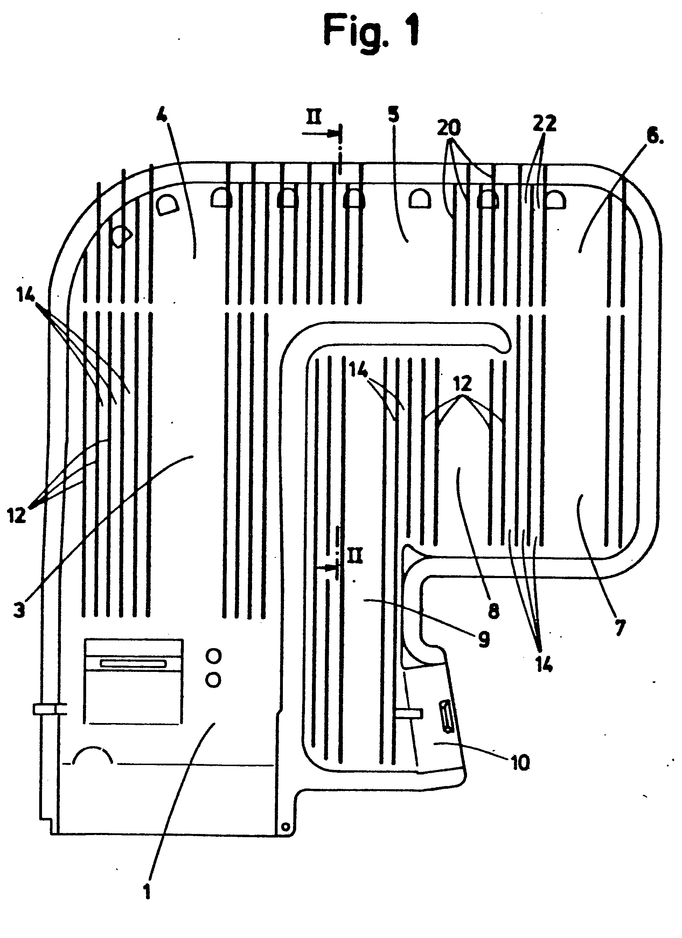

Fig. 1 eine Seitenansicht des Gerätes,

Fig. 2 einen Schnitt durch einen Querkanal nach der Linie II-II der Fig. 1, vergrößert, und

Fig. 3 eine Draufsicht auf einen Teil des Querkanals.

Das dargestellte Raumheizgerät umfaßt einen Verbrennungsraum 1, in dem sich ein Brennersatz (nicht sichtbar) befindet. An diesen schließt sich ein aufwärtsführender Kanalteil 3 eines als Wärmetauscher dienenden Verbrennungskanals an, der oben mittels eines Umlenkbogens 4 in einen waagerechten Querkanal 5 übergeht. Weitere Umlenkbögen 6 und 7 führen zu einem unteren waagerechten Kanalabschnitt 8 und schließlich zu einem abwärtsgerichteten Fallkanal 9, der mit einem Austrittsstutzen 10 für einen Kaminanschluß endet. Die Ausbildung der auf- und abwärtsführenden Kanalteile des Verbrennungsgaskanals ist nur beispielsweise zu betrachten; denn insbesondere die an den Querkanal anschließende Kanalführung kann auch einen anderen Verlauf nehmen. Dem dargestellten Heizgerät wird die Zuluft unterhalb des Brennersatzes durch einen Eintrittsstutzen unterhalb des Wohnraumbodens zugeführt, während die Verbrennungsgase nach dem Durchströmen des Verbrennungsgaskanals durch den über dem Raumboden angeordneten Austrittsstutzen 10 in den daran anzuschließenden Kaminschlauch (nicht gezeigt) ausströmen. Die Durchströmräume der aneinander angrenzenden Kanalabschnitte sind voneinander abgesetzt, jedoch materialmäßig durch Verbindungsflansche miteinander verbunden.

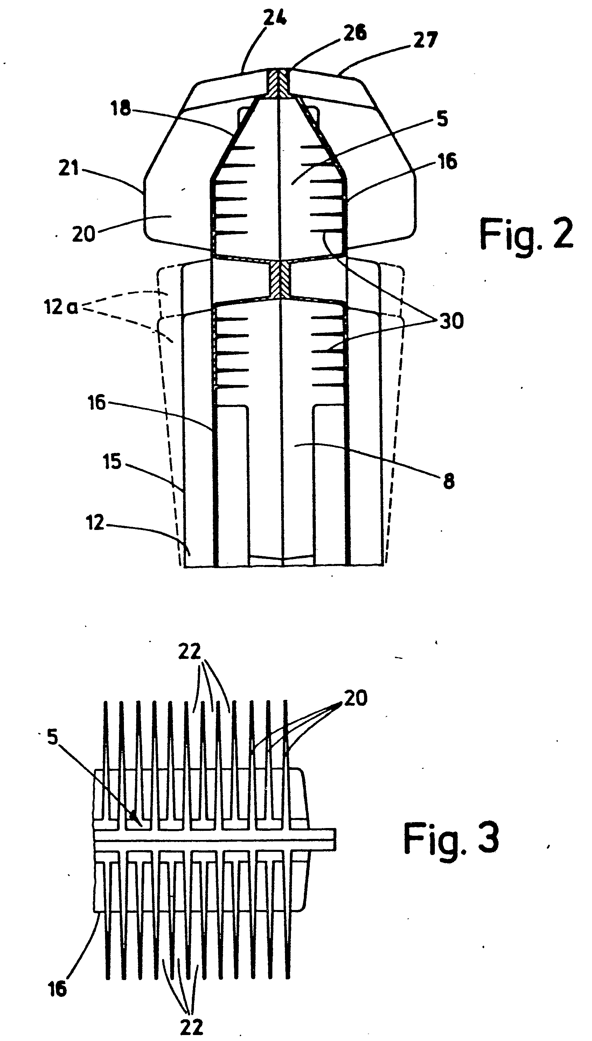

Die Seitenwände des Verbrennungsgaskanals weisen Außenlamellen 12 auf, die in Richtung der am Heizgerät hochsteigenden Warmluft verlaufen. Diese Außenlamellen sind sowohl am aufsteigenden Verbrennungsgaskanal 3, am Querkanal 5 mit den Umlenkbögen 4 und 6 als auch an den abwärtsführenden Kanalteilen 7, 8, 9 ausgebildet. Aufeinander ausgerichtet bilden die Lamellen Strömungsschächte 14 für die aufsteigende Luft. Die Außenlamellen an den aufwärts- und abwärtsführenden Kanalteilen stehen mit ihren Außenkanten 15 etwa 10 bis 20 mm von der Oberfläche der Kanalseitenwände 16 (Fig. 2) ab, und wenn diese Seitenwände in parallelen Ebenen verlaufen, dann trifft dies auch für deren Außenkanten zu. Das gezeigte Heizgerät besteht beispielsweise aus zwei längs einer Mittelebene miteinander verbundenen Formschalen. Wie aus Fig. 2 zu sehen ist, weist der Querkanal 5 eine satteldachförmige Deckenfläche 18 auf. Die Steigung dieses Satteldaches beträgt etwa 45 bis 60%. Sie bewirkt außen am Gerät eine ruhigere Warmluftführung, auch wird dadurch die effektive Heizfläche und der Durchströmungsquerschnitt des Querkanals vergrößert An den Seitenwänden dieses Querkanals sind anstelle der üblichen Außenlamellen Großflächenlamellen 20 ausgebildet. Beim Ausführungsbeispiel stehen die Außenkanten 21 wesentlich weiter als die Außenkanten 15 der obenerwähnten Lamellen 12 nach außen ab. Die von diesen Großflächenlamellen 20 gebildeten Strömungsschächte 22 sind zweckmäßig um das Zwei- bis Dreifache tiefer als die Strömungsschächte 14 der übrigen Lamellen. Auf diese Weise entstehen am Querkanal überstehende Auftriebsschächte für außerhalb der unteren Außenlamellen hochsteigenden Luftströme, die noch nicht merklich erwärmt sind und daher gerade vom Querkanal Wärme aufnehmen können. Dies trägt wiederum zu einer beachtlichen Verminderung der Erhitzungstemperatur an der Oberfläche des Querkanals bei. Die Großflächenlamellen erstrecken sich zweckmäßig auf die volle Höhe und gesamte Länge des Querkanals einschließlich der zugehörigen Umlenkbögen 6. Ihre Außenkanten 21 verlaufen meist parallel zur Seitenwand des Querkanals. Ist eine Satteldachdecke vorhanden, dann können diese Kanten ebenfalls zurückspringen. Wenn möglich, erstrecken sich die Großflächenlamellen über den Querkanal hinaus, so daß dann die Oberkante 24 auf der Höhe eines Schalenflansches 26 und nicht bereits, wie die Oberkante 27, bei der Satteldecke endet. Die beim Ausführungsbeispiel vorhandenen Innenlamellen sind mit 30 bezeichnet.

Die Großflächenlamellen können sich auch nur auf einem Längsbereich des Querkanals erstrecken, wobei zweckmäßigerweise der am meisten der Überhitzung ausgesetzte Bereich damit ausgestattet wird. Ist der Querkanal nicht mit einer satteldachförmigen Deckenfläche ausgerüstet, dann können sich Großflächenlamellen ebenfalls dieser Form anpassen. Schließlich besteht auch die Möglichkeit, die Großflächenlamellen nur im oberen Abschnitt des Querkanals anzubringen, wobei dann die unteren Lamellenabschnitte nur die Höhe der übrigen Außenlamellen aufweisen. Diese Lösung ist dann gegeben, wenn unterhalb des Querkanals sich keine Kanalteile und damit auch keine Außenlamellen befinden.

Unter bestimmten Verhältnissen kann es günstig sein, die unteren Außenlamellen 12 nach oben allmählich oder stufenweise zu den keilförmigen Außenlamellen 12a (gestrichelt) zu erweitern, wodurch der Auftrieb der äußeren Luftwärme verstärkt wird, weil die Erwärmung bereits früher einsetzt. Bei einem Heizgerät mit in verschiedenen Ebenen liegenden Seitenwänden und Außenlamellen sind die Großflächenlamellen so weit erhöht, daß sie seitlich über die darunter vorhandenen Außenlamellen vorstehen.

**Patentansprüche**

1. Mit gasförmigem oder vergastem flüssigem Brennstoff befeuertes Raumheizgerät für Kleinräume, insbesondere für Wohnwagen, mit gegen den zu beheizenden Raum abgeschlossenem Verbrennungsraum (1) und einem daran anschließenden, als Wärmetauscher ausgebildeten Verbrennungsgaskanal (3) mit einem oberen waagerechten Querkanal (5) sowie mit an den Seitenwänden dieses Verbrennungsgaskanals vertikal angeordneten Außenlamellen (12), dadurch gekennzeichnet, daß die Außenlamellen des Querkanals (5) mindestens im Bereich seiner stärksten Erhitzung zu Großflächenlamellen (20) ausgebildet sind, deren Außenkanten (21) von der vertikalen Wand (16) des Querkanals einen größeren Abstand als die Außenkanten (15) der darunterliegenden Außenlamellen (12) von ihrer zugehörigen Kanalwand aufweisen.

2. Heizgerät nach Anspruch 1, dadurch gekennzeichnet, daß der Abstand der Außenkanten (21) der Großflächenlamellen (20) von der zugehörigen Kanalwand (16) mindestens doppelt so groß ist wie der Abstand der Außenkante (15) der unteren Außenlamellen (12) von der zugehörigen Kanalwand.

3. Heizgerät nach Anspruch 1 oder 2, dadurch gekennzeichnet, daß die Großflächenlamellen (20) sich auf die gesamte Länge des Querkanals (5) einschließlich der Umlenkbögen (4, 6) erstrecken.

4. Heizgerät nach einem der Ansprüche 1 bis 3, mit einem unterhalb des Querkanals angeordneten abwärtsführenden Kanalteil, dadurch gekennzeichnet, daß die Großflächenlamellen (20) sich auf die volle Höhe des Querkanals erstrecken.

5. Heizgerät nach einem der Ansprüche 1 bis 4, dadurch gekennzeichnet, daß zumindest ein Teil der Großflächenlamellen (20) sich oben über den Querkanal (5) hinaus erstrecken.

6. Heizgerät nach einem der Ansprüche 1 bis 5, dadurch gekennzeichnet, daß die Außenkanten (21) der Großflächenlamellen (20) etwa parallel zu den Seitenwänden des Querkanals (5) verlaufen.

7. Heizgerät nach einem der Ansprüche 1 bis 5, dadurch gekennzeichnet, daß die Großflächenlamellen (20) gegenüber den unteren Außenlamellen (12) versetzt sind.

8. Heizgerät nach einem der Ansprüche 1 bis 7, dadurch gekennzeichnet, daß die unteren Außenlamellen (12) bzw. Lamellenabschnitte allmählich oder stufenweise bis auf den größten Abstand der Großflächenlamellen erweitert sind.

## Claims

1. Space heater for small rooms adapted to be fired with a gaseous or vapourized liquid fuel, especially for mobile homes, with a combustion space (1) separated in the direction of the room to be heated and a combustion gas channel (3) connected thereto serving as a heat exchanger with an upper horizontal cross channel (5) as well as outer fins (12) vertically arranged on the side-walls of this combustion gas channel, characterized in that the outer fins of the cross channel (5) are formed at least in the region of its greatest heating as large surface fins (20), whose outer edges (21) have a greater distance from the vertical wall (16) of the cross channel than the outer edges (15) of the outer fins (12) provided thereunder from their respective channel walls.

2. Space heater according to claim 1, characterized in that the distance of the outer edges (21) of the large surface fins (20) from the corresponding channel wall (16) is at least twice as large as the distance of the outer edge (15) of the lower outer fins (12) from the respective channel wall.

3. Space heater according to claim 1 or 2, characterized in that the large surface fins (20) extend over the entire length of the cross channel (5) including the turnarounds (4, 6).

4. Space heater according to one of the claims 1 to 3, wiht a downwardly directed channel part arranged under the cross channel, characterized in that the large surface fins (20) extend for the full height of the cross channel.

5. Space heater according to one of the claims 1 to 4, characterized in that at least one part of the large surface fins (20) extends upwardly from the cross channel (5).

6. Space heater according to one of the claims 1 to 5, characterized in that the outer edges (21) of the large surface fins (20) extend about parallel to the side-walls of the cross channel (5).

7. Space heater according to one of the claims 1 to 5, characterized in that the large surface fins (20) are offset opposite the lower outer fins (12).

8. Space heater according to one of the claims 1 to 7, characterized in that the lower outer fins (12) or fin sections are enlarged gradually or stepwise up to the greatest distance of the large surface fins.

## Revendications

1. Appareil de chauffage pour petits locaux, en particulier pour caravanes, fonctionnant avec un combustible gazeux ou un combustible liquide gazéifié, comprenant une chambre de combustion (1) fermée vers le local devant être chauffé et un conduit (3) à gaz de combustion qui, réalisé en forme d'échangeur de chaleur, fait suite à la chambre de combustion et comporte un conduit transversal (5) s'étendant en haut à l'horizontale, ainsi que des nervures externes (12) disposées verticalement sur les parois latérales dudit conduit à gaz de combustion, caractérisé par le fait que les nervures externes du conduit transversal (5), au moins dans la zone de son échauffement le plus fort, sont réalisées sous la forme de nervures (20) de grande surperficie dont les bords extérieurs (21) présentent un écart par rapport à la paroi verticale (16) du conduit transversal qui est plus grand que celui entre les bords extérieurs (15) des nervures externes (12) disposées en-dessous et la paroi de conduit afférente.

2. Appareil de chauffage suivant la revendication 1, caractérisé par le fait que la distance des bords extérieurs (21) des nervures (20) de grande surperficie par rapport à la paroi (16) de conduit leur correspondant est au moins deux fois aussi grande que la distance des bords extérieurs (15) des nervures externes (12) inférieures par rapport à la paroi de conduit leur correspondant.

3. Appareil de chauffage suivant la revendication 1 ou 2, caractérisé par le fait que les nervures (20) de grande surperficie s'étendent sur la totalité de la longueur du conduit transversal (5), les coudes de déviation (4, 6) compris.

4. Appareil de chauffage suivant l'une des revendications 1 à 3, comportant une partie de conduit disposée en-dessous du conduit transversal et menant vers le bas, caractérisé par le fait que les nervures (20) de grande superficie s'étendent sur la totalité de la hauteur du conduit transversal.

5. Appareil de chauffage suivant l'une des revendications 1 à 4, caractérisé par le fait qu'au moins une partie des nervures (20) de grande surperficie s'étend en haut au-delà du conduit transversal (5).

6. Appareil de chauffage suivant l'une des revendications 1 à 5, caractérisé par le fait que les bords extérieurs (21) des nervures (20) de grande superficie s'étendent à peu près parallèlement aux parois latérales du conduit transversal (5).

7. Appareil de chauffage suivant l'une des revendications 1 à 5, caractérisé par le fait que les nervures (20) de grande superficie sont décalées par rapport aux nervures externes (12).

8. Appareil de chauffage suivant l'une des revendications 1 à 7, caractérisé par le fait que les nervures externes (12) ou des portions de nervure inférieures sont élargies peu à peu ou graduellement jusqu'à la distance la plus grande des nervures de grande superficie.

# Fig. 1

Fig. 2

Fig. 3